(19) **Europäisches Patentamt**

**European Patent Office**

**Office européen des brevets**

(11) **EP 1 459 128 B1**

(12) **EUROPEAN PATENT SPECIFICATION**

(45) Date of publication and mention
of the grant of the patent:
**26.10.2005 Bulletin 2005/43**

(51) Int Cl.⁷: **G02F 1/1335**

(86) International application number:
**PCT/IB2002/005012**

(21) Application number: **02783452.2**

(22) Date of filing: **25.11.2002**

(87) International publication number:
**WO 2003/048847 (12.06.2003 Gazette 2003/24)**

(54) **TRANSFLECTIVE LIQUID CRYSTAL DISPLAY DEVICE**

TRANSFLEKTIVE FLÜSSIGKRISTALLANZEIGEVORRICHTUNG

DISPOSITIF D'AFFICHAGE A CRISTAUX LIQUIDES TRANSFLECTIF

(84) Designated Contracting States:
**AT BE BG CH CY CZ DE DK EE ES FI FR GB GR
IE IT LI LU MC NL PT SE SK TR**
Designated Extension States:
**AL LT LV MK RO SI**

(30) Priority: **06.12.2001 EP 01204716**

(43) Date of publication of application:
**22.09.2004 Bulletin 2004/39**

(73) Proprietor: **Koninklijke Philips Electronics N.V.
5621 BA Eindhoven (NL)**

(72) Inventor: **ROOSENDAAL, Sander, J.
NL-5656 AA Eindhoven (NL)**

(74) Representative: **van der Veer, Johannis Leendert
Philips
Intellectual Property & Standards
Prof. Holstlaan 6, Building WAH
5656 AA Eindhoven (NL)**

(56) References cited:
**US-B1- 6 195 140**

• **UGAI Y ET AL: "DEVELOPMENT OF
WIDE-VIEWING-ANGLE FULL-COLOR
TFT-LCDS FOR A NEW TYPE OF PASSENGER
PLANE COCKPIT DISPLAY" ELECTRONICS &
COMMUNICATIONS IN JAPAN, PART II -
ELECTRONICS, SCRIPTA TECHNICA. NEW
YORK, US, vol. 80, no. 12, 1 December 1997
(1997-12-01), pages 18-29, XP000782980 ISSN:
8756-663X**

**Description**

This invention relates to a transflective liquid crystal display device, having at least one pixel, comprising a reflective sub-pixel including a first liquid crystal cell and a transmissive sub-pixel including a second liquid crystal cell

The invention also relates to a method for addressing such a transflective liquid crystal display device.

Due to its low power consumption, reliability and low price, liquid crystal displays, or LCDs have become the standard display choice for mobile applications, such as PDAs, laptops and cellular phones. Different LCD types, such as active matrix reflective and transmissive LCDs are today available on the market. Reflective LCDs are especially suited for outdoor use in direct sunlight. The contrast ratio is relatively low, compared with a transmissive display, and under poor illumination conditions, the brightness of this kind of display is low. On the other hand, transmissive LCDs have a good contrast ratio, but they become practically unreadable in direct sunlight illumination conditions. Furthermore, the transmissive display utilizes a backlight, resulting in an increase of the power consumption.

Consequently, there is a need for a display having good display properties under all lighting circumstances. One solution is to use a so-called transflective LCD, which may be used in both a transmissive and reflective mode at the same time. The intensity of the backlight can thereby be tuned in order to fit the lighting conditions, either by hand, or automatically, using a photo diode or the like. This invention relates to a transflective liquid crystal display and a method for improving the backlight efficiency of such a display.

A transflective display as described above is for example described in the patent document US-6 195 140, in which a liquid crystal display device includes a reflection region and a transmission region.

However, in order to achieve a transflective display having a good contrast, it must be possible to drive both the reflection region and the transmission region, each constituting a sub-pixel of the display, at a state with essentially zero transmission or reflection. This is referred to as a good dark state.

The transmission or reflection of the different states of the display device are dependent upon the twist angle and the effective optical thickness u of the display, which is given by (for a non-twisted nematic layer):

$$u = \frac{d \Delta n}{\lambda} \qquad (1)$$

where d is the cell gap, $\Delta n$ is the birefringence of the liquid crystal layer and $\lambda$ is the wavelength of the incident light. When an electric field (above a threshold value) is applied over the liquid crystal cell, the liquid crystals start to tilt and the light passing the cell experiences less birefringence. Therefore, it is possible to define an effective birefringence ($\Delta n$) and an effective optical thickness ($u_{eff}$) of the cell, in a similar way as defined in (1). $\Delta n_{eff}$ and $u_{eff}$ are functions of the voltage applied to the cell.

As implicitly said above, the reflection as well as the transmission of the transflective display is dependent upon the optical thickness u and the twist angle ($\phi$). Further, the effective value of u ($u_{eff}$) may be altered (lowered) by applying an electrical field over the display. Traditionally, both the reflective and transmissive sub-pixels of a transmissive display have had the same optical thickness. Thereby, a display may be generated, having a value of u for which both the transmission and the reflection of the respective sub-pixels have comparatively high values (bright state), and having a value of $u_{eff}$ (when a certain field is applied over the pixel) for which both the transmission and the reflection of the respective sub-pixels have comparatively low values (dark state). Because the dark state of the cell has to be at the same value of $u_{eff}$ for both the reflective and transmissive sub-pixel, the polarization state of the light just after the reflector in the reflective sub-pixel, is the same as the polarization state of the light entering the liquid crystal layer in the transmissive sub-pixel. For the dark state, this polarization state of the light is a circular polarized state. To achieve this in the transmissive sub-pixel, a compensation foil has to be present, which transforms the linear polarization of the entry polarizer to circular polarized light. To obtain maximum reflection in the bright state of the reflective sub-pixel, the light just after the reflector has to be linearly polarized, and the optical thickness of the cell and the twist angle are adjusted to achieve this. For the bright state of the transmissive sub-pixel, however, the light entering the liquid crystal layer is still circularly polarized by the compensation foil. It can be shown that a liquid crystal layer, which transforms a linear polarization state into a linear polarization state, will transform a circular polarization state into a circular polarization state. Thus, at the exit polariser, half of the light will be absorbed and the transmission of the bright state will only be 50%.

One solution to the above problem, namely the low transmission in bright transmissive sub-pixels, has been proposed by the above document US-6 195 140, namely to provide a display device having different cell gaps for the reflective and transmissive sub-pixels, respectively, thereby optimizing the value of u. However, this solution is disadvantageous in that the active plate has to be provided with lower and higher regions on its surface in order to provide said different cell gaps, and thus the fabrication of this active plate is rather expensive. Other means for solving the above technical problem is therefore desired.

Consequently, an object of the invention is to accomplish a transflective liquid crystal display device, overcoming the above-mentioned drawbacks.

A further object of the invention is to provide a transflective liquid crystal display device, having an increased backlight efficiency.

Yet another object of this invention is to provide a transflective liquid crystal display device, having an increased viewing angle.

These and other objects are achieved by a display device, as described by way of introduction, being characterized in that said sub-pixels are arranged to be driven at mutually different driving voltages. Thereby, an extra degree of freedom is introduced, which may be used to optimize the transmission of the transmissive and reflective sub-pixels. By using the invention, it is possible to allow the dark state of the reflective and transmissive sub-pixels to have different values of $u_{eff}$. Consequently, the dark states of the different sub-pixels may be at different voltages. Suitably, one of said sub-pixels is provided with a sub-pixel voltage altering device. By including said voltage altering device in one of the sub-pixels, it is possible to drive the liquid crystal cells of the reflective and transmissive sub-pixels at mutually different voltages. By including a voltage altering device in the sub-pixel, it is also possible to use simpler driving integrated circuits and to reduce the number of data lines of the display.

Preferably, said sub-pixel voltage altering device is connected in series with a liquid crystal cell of said one sub-pixel. Thereby, the above-described voltage altering may be achieved by voltage division, being a rather straight-forward method. According to a preferred embodiment of this invention, said sub-pixel voltage altering device is constituted by a first capacitor. Thereby, a simple, stable and cost-efficient device for voltage altering is achieved.

Furthermore, a second altering circuit is suitably connected in parallel with the liquid crystal cell of said one sub-pixel, being connected in series with said sub-pixel voltage altering device. Thereby, a single voltage in the driving electronics corresponds to a single gray-level of both sub-pixels, resulting in the use of comparatively simple drive electronics for the display. Preferably, said second altering circuit is constituted by a second capacitor. Thereby, a simple, stable and cost-efficient device is achieved.

According to an alternative embodiment of this invention, said reflective and transmissive sub-pixel comprises a first and a second liquid crystal layer segment, respectively, having mutually different twist angles. Thereby, an extra degree of freedom for the choice of compensation foil(s) and polariser orientation on the backlit side of the transmission sub-pixel is achieved, which may be used to increase the overall efficiency of the backlight.

Moreover, said sub-pixel voltage altering device is preferably arranged to alter a voltage applied to said one sub-pixel by a data line of said display. Thereby, a common voltage may be applied to all data lines, resulting in the use of comparatively simple drive electronics for the display.

The objects of the present invention is also achieved by a method, as described by way of introduction, comprising the steps of

- applying a first driving voltage (V1) over said first liquid crystal cell and
- applying a second driving voltage (V2) over said second liquid crystal cell, said first driving voltage being different from said second driving voltage.

Thereby, an extra degree of freedom is introduced, which may be used to optimize the transmission of the transmissive and reflective sub-pixels. By using the invention, it is possible to allow the dark state of the reflective and transmissive sub-pixels to have different values of $u_{eff}$. Consequently, the dark states if the different sub-pixels may be at different voltages.

Preferably, when the liquid crystal display comprises in said first sub-pixel a sub-pixel altering device the method further comprises the steps of:

applying a common voltage VTOT, equal to the desired second driving voltage (V2), over said first and second sub-pixels, respectively, the voltage over said first liquid crystal cell (15a) due to the sub-pixel voltage altering device being substantially equal to said first driving voltage (V1), when the second driving voltage is applied to the second sub-pixel.

Thereby, a single driving circuit, providing a single data voltage may be used. Moreover, the method suitably comprises the step of determining said driving voltages individually in order to optimize the reflection in case of a reflective sub-pixel or the transmission in case of a transmissive sub-pixel of said display device.

According to a preferred embodiment of this invention, the step of arranging in said first sub-pixel, a sub-pixel voltage altering device, comprises the step of arranging said sub-pixel voltage altering device in series with said liquid crystal cell of said one sub-pixel. Thereby, the inventive voltage difference between the liquid crystal cells is readily achieved by means of voltage division. Preferably, said sub-pixel voltage altering device is constituted by a first capacitor, being a cost-efficient and straight-forward way of achieving the inventive result.

According to an alternative embodiment, the method further comprises the step of connecting a second altering circuit in parallel with the liquid crystal cell of said one sub-pixel, being connected in series with said sub-pixel voltage altering device, resulting in a further degree of freedom when determining the exact relation between the first driving voltage and the second driving voltage. Suitably, said second altering circuit is constituted by a second capacitor.

According to yet a preferred embodiment of the invention, the method further comprises the steps of:

- determining a desired first twist angle of a liquid crystal layer of said first sub-pixel,
- determining a desired second twist angle of a liquid crystal layer of said second sub-pixel, said first and second twist angles being mutually different,
- applying said first and second twist angles to a respective liquid crystal layer of said first and second sub-pixels. Thereby, an extra degree of freedom for the choice of compensation foil(s) and polariser orientation on the backlit side of the transmission sub-pixel is achieved, which may be used to increase the overall efficiency of the backlight.

This invention will hereinafter be described in closer detail, with reference to the accompanying drawings.

Fig 1 is a schematic drawing showing a cross-section of a transflective display pixel.

Fig 2 is a circuit diagram showing a first embodiment of this invention.

Fig 3 is a second circuit diagram showing a second embodiment of this invention.

Fig 4 is a diagram showing the reflection and transmission vs. the driving voltage for a non-twisted transflective cell.

Fig 5 is a diagram showing the reflection and transmission vs. the driving voltage for a 57° twisted transflective display.

Fig 6 is a diagram showing the reflection and transmission vs. the driving voltage for a 63°/90° twisted transflective cell.

Fig 7a is a diagram showing the contrast ratio for the reflective sub-pixel of the 63° twisted nematic display.

Fig 7b is a diagram showing the contrast ratio for the transmissive sub-pixel of the 63° twisted nematic display.

Fig 7c is a diagram showing the contrast ratio for the transmissive sub-pixel of the 63°/90° twisted nematic display.

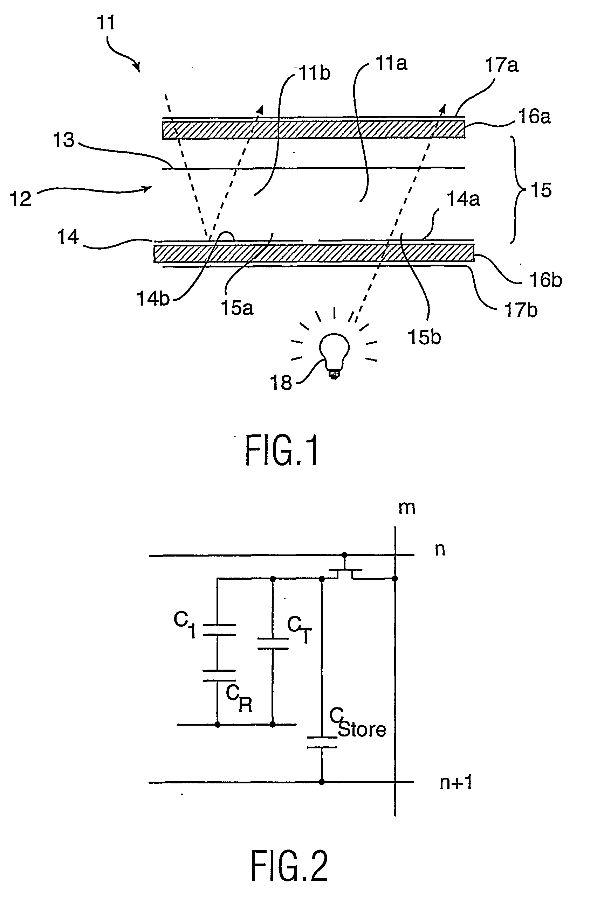

In fig 1, a transflective liquid crystal display arrangement 11 is shown. A transflective display is a display that might be driven in a reflective mode and/or a transmissive mode. The display according to fig 1 comprises a liquid crystal layer 12, in the present embodiment being a twisted nematic liquid crystal layer. This layer 12, is sandwiched between a transparent front electrode 13 and a back electrode 14. Furthermore, orientation layers (not shown) are arranged on said electrodes 13, 14 in order to induce an equilibrium orientation as well as twist and pre-tilt angles of the liquid crystal material layer 12. The display 11 is subdivided into a plurality of pixels, and the pixels are arranged in a plurality of data lines and addressing lines in accordance with prior art. Fig 1 schematically shows one such pixel.

As shown in fig 1, each pixel is subdivided into a first and a second sub-pixel 11a, 11b, respectively not necessarily having the same area, whereby said first sub-pixel 11a is referred to as a transmissive sub-pixel and said second sub-pixel is referred to as a reflective sub-pixel. Each transmissive sub-pixel 11a contains a first back electrode part 14a, being transparent, e.g. manufactured from ITO, and each reflective sub-pixel comprises a second back electrode part 14b, being combined with a reflector, such as an aluminum layer or the like. Said first electrode part 14a consequently defines a transmitting pixel part, and said second electrode part 14b defines a reflective pixel part. Together, said liquid crystal layer 12 and said electrodes 13, 14 constitute a first and a second liquid crystal cell 15a, 15b. It shall be noted especially that both sub-pixels of the cell have approximately the same cell gap.

Furthermore, the liquid crystal cells are sandwiched between a front optical foil 16a and a back optical foil 16. Moreover, on the viewer side of the device a front polarizer 17a is arranged, and on the backside, a back polarizer 17b and a backlight panel 18 is arranged, as indicated in fig 1.

A first embodiment of the invention is disclosed in fig 2. Fig 2 shows an electrical equivalent for a single pixel (data line m and addressing line n of the display device), having a transmissive and a reflective sub-pixel as described above. The transmissive sub-pixel is here schematically represented by a capacitance $C_T$ and the reflective sub-pixel is schematically represented by a capacitance $C_R$. In fig 2, no consideration is taken to parasitic capacitances. The values of $C_T$ for the transmissive sub-pixel and $C_R$ for the reflective sub-pixel are depending upon for example the average orientation of the liquid crystal molecules in the liquid crystal cell of the respective sub-pixel, and are therefore dependant on an applied voltage over each liquid crystal cell. The circuit shown in fig 2 also comprises a storage capacitor $C_{store}$, being connected between addressing line n and the previous or next addressing line of the display on per se known manner, but its function is not essential for this invention and will therefore not be closer described herein.

However, in accordance with the invention a voltage altering device, here a first capacitance $C_1$, is arranged in series with one of the transmissive sub-pixel and the reflective sub-pixel $C_R, C_T$ respectively. In the embodiment shown in fig 2, the first capacitor $C_1$ is connected in series with the reflective sub-pixel $C_R$, and thereby, a voltage $V_R$ over the reflective sub-pixel $C_R$ is lowered, due to voltage division over $C_1$ and $C_R$.

Given that $V_T$ is the voltage over the transmissive sub-pixel $C_T$ in fig 2, then the voltage $V_R$ over the the reflective sub-pixel $C_R$ is given by:

$$V_R = \frac{C_1}{C_1 + C_R}\, V_T = \alpha V_T$$

Since $C_R$ in the above relationship is depending upon the driving state of the liquid crystal (since $C_R$ is a schematic representation of the reflective sub-pixel, as stated above), so is $\alpha$. For example, for a liquid crystal material having a positive value of $\Delta\varepsilon$ (dielectric anisotropy), the value of $\alpha$ is closer to 1 for a planar, non-switched state, and decreases as the molecular tilt of the liquid crystal material increases (due to switching).

Correspondingly, if the first capacitance $C_1$ is connected in series with the transmissive sub-pixel $C_T$, the voltage over the transmissive sub-pixel may be lowered in a corresponding way as described above.

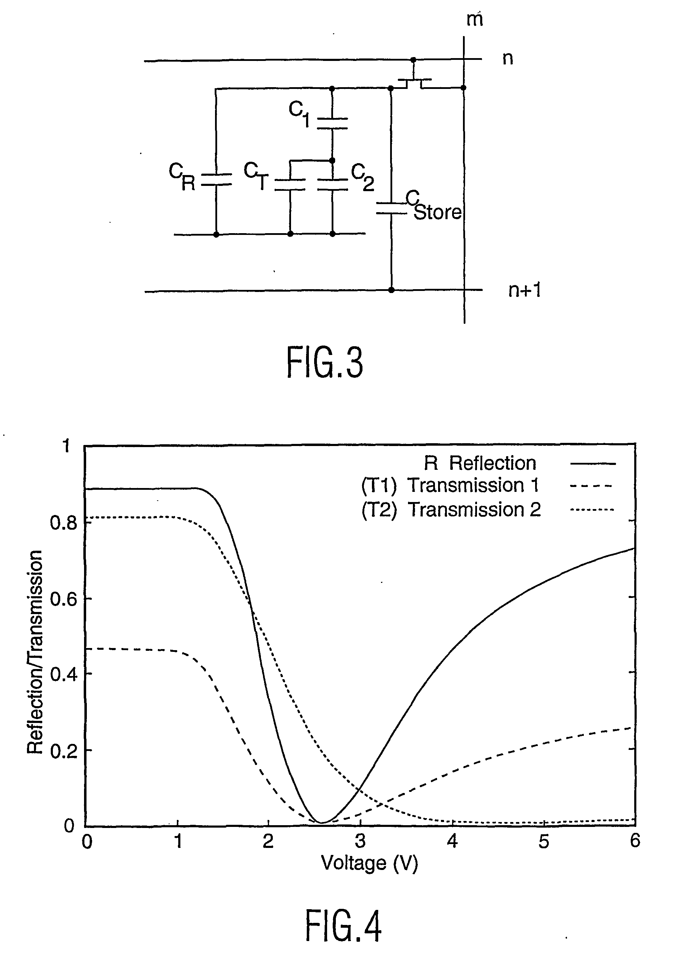

Further, a second embodiment of the invention is disclosed in fig 3. Fig 3 discloses an electrical equivalent for a single pixel (data line m and addressing line n of the display device), having a transmissive and a reflective sub-pixel as described above. The transmissive sub-pixel is here also schematically represented by a capacitance $C_T$ and the reflective sub-pixel is schematically represented by a capacitance $C_R$. In fig 3, no consideration is taken to parasitic capacitances. The values of $C_T$ for the transmissive sub-pixel and $C_R$ for the reflective sub-pixel are depending upon the orientation of the liquid crystal molecules in the liquid crystal cell of the respective sub-pixel, and are therefore dependant on an applied voltage over each liquid crystal cell. The circuit shown in fig 3 also comprises a storage capacitor $C_{store}$, as described above, in connection with fig 2.

However, in accordance with the invention, as is also described with reference to fig 2, a sub-pixel voltage altering device, a first capacitance $C_1$, is arranged in series with one of the transmissive sub-pixel and the reflective sub-pixel $C_R,C_T$ respectively. Furthermore, a second altering device, here a capacitance $C_2$, is connected in parallel with the same one of said transmissive sub-pixel or the reflective sub-pixel $C_R,C_T$ respectively. In the embodiment shown in fig 3, the first capacitor $C_1$ is connected in series with the transmissive sub-pixel $C_T$, and the second capacitor $C_2$ is connected in parallel with the transmissive sub-pixel $C_T$. In this case, given that $V_R$ is the voltage over the reflective sub-pixel $C_R$ in fig 3, then the voltage $V_T$ over the transmissive sub-pixel $C_T$ is given by:

$$V_T = \frac{C_1}{C_1 + C_2 + C_T} \cdot V_R = \beta \cdot V_R$$

Thereby, by choosing the values of the capacitors $C_1$ and $C_2$ in a suitable manner, both the value and the voltage dependence of $\beta$ may be changed. A parallel capacitor, such as $C_2$ may be manufactured by the use of lithographic spacers. By choosing the spacer material, as well as the spacer area, a suitable flat plate capacitor is formed by the electrodes, being separated by the spacer. This method does require exact positioning of the spacers, which may be achieved by lithography.

Examples of the above embodiments of the invention will hereinafter be described.

Fig 4 shows the simulated reflection and transmission curves for a non-twisted transflective display. The polarisers 17a,17b, as shown in fig 1, were at a 45 degree angle with respect to the LC director of the liquid crystal layer 12 and the cell gap was tuned to match an optical effective thickness of $d\Delta n/\lambda=0.5$, being a reflection maximum. In this case, the liquid crystal material has $\in_\parallel=2$ and $\Delta\varepsilon=8.3$. Two transmission curves are plotted in fig 4. The first curve T1 shows a prior-art solution where $u_{eff}$ is the same for both the transmissive and the reflective sub-pixel. Since circular polarization is needed in the dark state, the transmission in the bright state is limited to 50% or less. In the second case T2, the transmissive sub-pixel is switched between 1.5 and 4.5 V, while the value of the first capacitor C1 is adjusted so that the reflective sub-pixel is switched between 1.26 V and 2.57 V. The efficiency of the backlight is thereby increased from 45% to 72%.

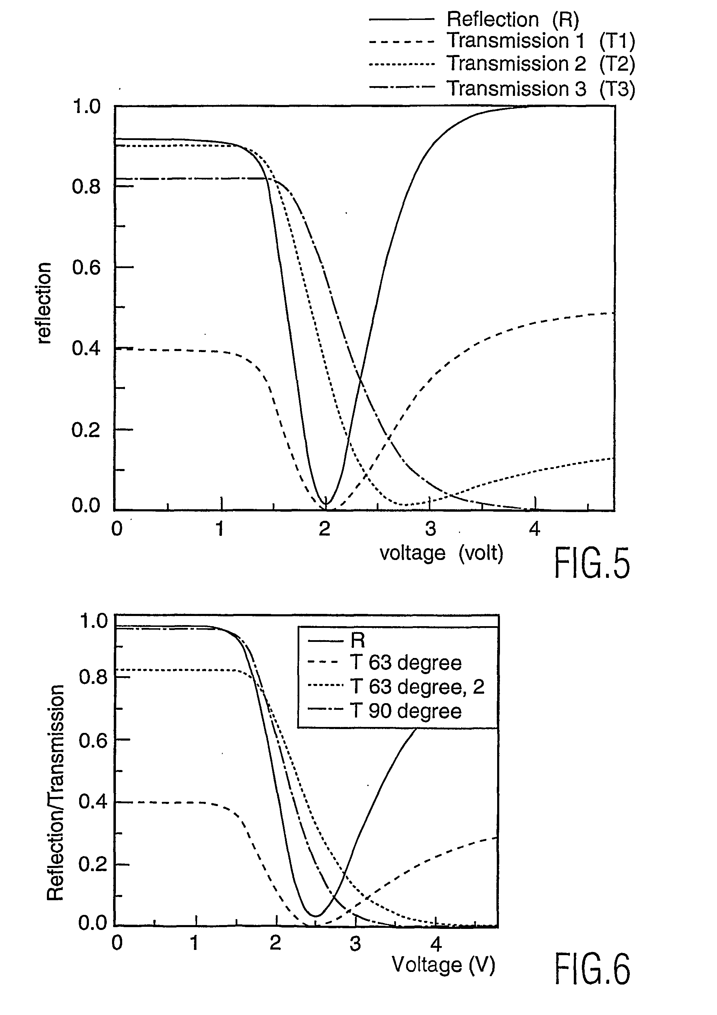

Fig 5 shows the simulated reflection and transmission curves for a 57° twisted transflective display. The viewing side polariser 17a, as shown in fig 1, were at a 30 degree angle with respect to the LC director at the viewing side and the cell gap was tuned to match an optical thickness of $d\Delta n/\lambda=0.88$. In this case, the liquid crystal material has $\varepsilon_\parallel=3.6$ and $\Delta\varepsilon=6.7$. Here, three alternatives for the transmissive sub-pixel are plotted in fig 5. If both sub-pixels are switched between 1.3 V and 2 V, the backlight efficiency is only 37%. In the variant where the transmissive sub-pixel is switched between 1.5 V and 2.8 V and the reflective sub-pixel between 1.3 V and 2V, the efficiency of the backlight is increased to 90%. In the third variant where the transmissive sub-pixel is switched between 1.6 V and 2.7 V, the efficiency of the backlight is increased to 82%. In both cases, the backlight efficiency is more than doubled.

It should be noted that in all of the above-given examples, the voltage dependence of $\alpha$ and $\beta$, as described above, is an advantage, because lower values of $\alpha$ and $\beta$ are needed for the black state.

It shall also be noted that the above-described are not the only reflective modes that may be used in a transflective liquid crystal display in accordance with the invention, but in principle, all reflective liquid crystal modes may be used.

According to a third preferred embodiment of this invention, a transmissive display has a transmissive and a reflective sub-pixel, as is shown in fig 1 and is indicated above. The transmissive sub-pixel may, in the same way as above, be schematically represented by a capacitance $C_T$ and the reflective sub-pixel may be schematically represented by a capacitance $C_R$. In accordance with the invention a sub-pixel voltage altering device, such as a first capacitance $C_1$, is arranged in series with one of the transmissive sub-pixel and the reflective sub-pixel $C_R,C_T$ respectively. By connecting one of the sub-pixels in series with a capacitor, both sub-pixels may be driven at different voltages. Furthermore, the liquid crystal material of the reflective and transmissive sub-pixels, respectively, are arranged to have different twist angles. This may be achieved by photo-alignment of said orientation layers as is known in the prior art, as the use of photo-alignment makes it possible to define the orientation of the liquid crystal molecules locally. The advantage of this is that two degrees of freedom (dark state voltage and twist angle) are available when choosing compensation foil(s) and to increase the efficiency of the backlight. By carefully choosing the twist angle of the transmissive sub-pixel, both the grayscale linearity and/or the viewing angle may be improved, while the driving voltages may be lowered as will be described below. This results in a significant power reduction as well as an improvement of the viewing angle.

An example of the reflection and transmission of a display according to the above-described third embodiment of this invention is shown in fig 6. Fig 6 shows the reflection vs. voltage and transmission vs. voltage curves for a transflective display in accordance with the invention, having a twist angle of 63 °for the reflective sub-pixels. The liquid crystal material and the cell gap are tuned so that $d\Delta n/\lambda=0.75$ and the liquid crystal material has $\in_\parallel=3.6$ and $\Delta\varepsilon=6.7$. By increasing the voltage on the transmissive sub-pixel (and applying a suitable correction foil on the backlit side of the display), an increase of the backlight efficiency from 40% to 80% is achieved, as seen in fig 6. Fig 2 also shows the corresponding curve for a 90° twisted cell. There are two advantages of increasing the twist angle. First, the dark state is reached at a lower voltage, which saves power, both in the display panel and in the driver integrated circuits. Second, the efficiency of the backlight is even higher. Thereby, by driving the transmissive sub-pixel between 3.8 V and 1.6 V and the reflective sub-pixel between 2.5 V and 1.3 V, a backlight efficiency of 90% is achieved. The differences in grayscale linearity between both sub-pixels are minimal. In order to achieve the same amount of grayscale similarity for the 63° twisted case, one would have to drive the bright state at 1.9 V, which decreases the backlight efficiency to 75%.

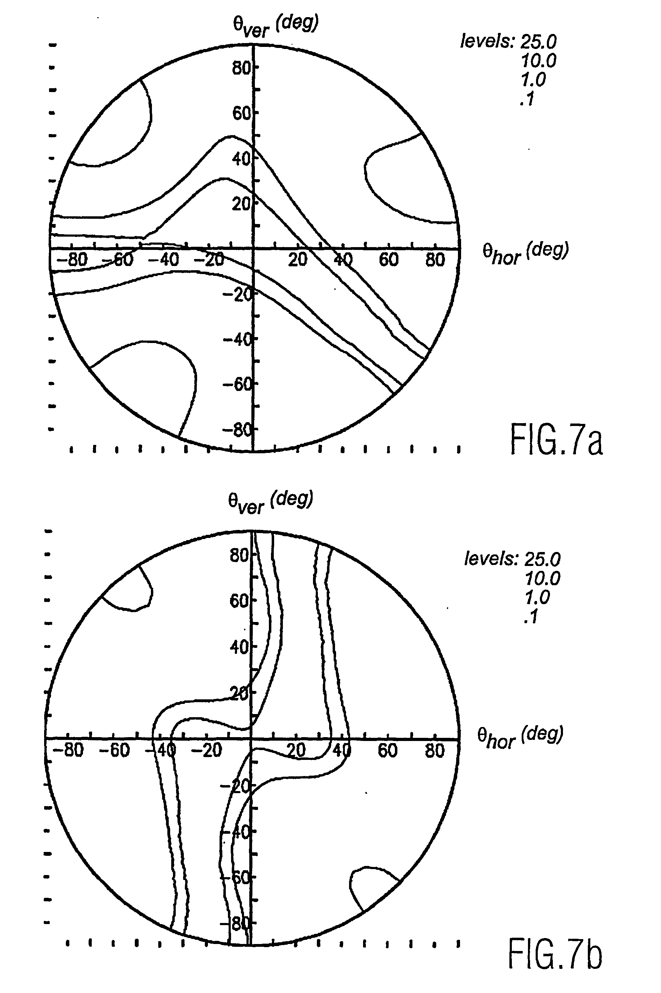

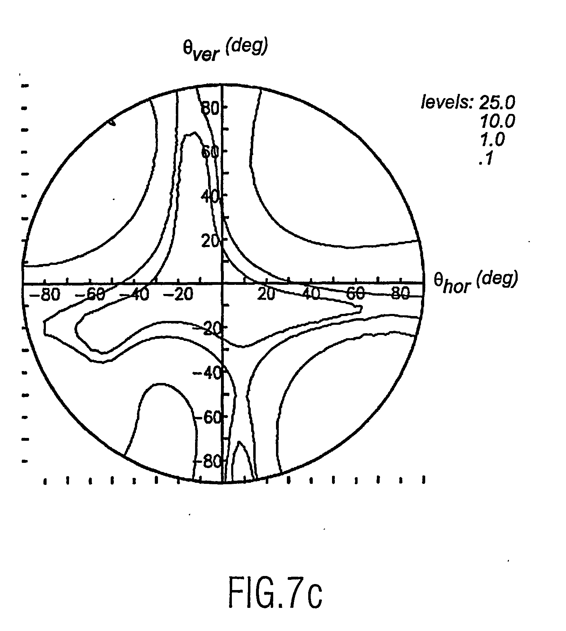

Fig 7a shows the contrast ratio of the reflective sub-pixel. The contrast ratio was calculated as the ratio of the reflectivity of the bright and dark states, respectively, where the dark state was at 2.5 V in this case. Fig 7b shows the contrast ratio of the transmissive sub-pixel, while fig 7c shows the same for the 90° twisted transmissive sub-pixel. In all three figures, the contrast ratio around the normal viewing direction is much higher than 25. As may be seen from fig 7b and 7c, this central part with contrast ratio higher than 25, is larger for the 90° twisted solution than for the 63° twisted solution.

This viewing angle improvement is achieved without the use of an extra compensation foil. By using compensation foils, which do not alter the polarization state of perpendicular incident light, the viewing angle properties of the display may of cause be improved even further.

In summary, a transflective display has been proposed, which has separate reflective and transmissive sub-pixels. Such a display may be operated in both modes at the same time, thereby greatly increasing the range of applications. Both sub-pixels may be driven at different voltages. This gives an extra degree of freedom for the choice of compensation foil(s) and polariser orientation on the backlit side of the transmission sub-pixel, which may be used to increase the overall efficiency of the backlight. This may be achieved by including a voltage altering device in one of the sub-pixels. One example that is given is the inclusion of a capacitor, being connected in series with the liquid crystal cell of the sub-pixel, thereby utilizing voltage division.

In this way, the efficiency of the backlight may be more than doubled, which will remarkably increase the battery life of for example a mobile device containing such an inventive display. This solution is also easier to fabricate, in relation to the alternative solution with different cell gaps for different sub-pixels. Furthermore, the transmissive cell gap need not be twice as big as the reflective cell gap (as is the case in prior art devices), which simplifies the manufacturing of the inventive device. Further, the inventive solution provides for a higher transmission than prior art single gap devices and moreover the use of photoalignment is not necessary.

Alternatively, a transflective display is proposed, which has separate reflective and transmissive sub-pixels with different twist angles. The different twist angles may be achieved by photo-alignment. Both sub-pixels may be driven at different voltages. This gives an extra degree of freedom for the choice of compensation foil(s) and polariser orientation on the backlit side of the transmission sub-pixel, which may be used to increase the overall efficiency of the backlight. This may be achieved by including a voltage altering device in one of the sub-pixels. One example that is given is the inclusion of a capacitor, being connected in series with the liquid crystal cell of the sub-pixel, thereby utilizing voltage division. In this way the backlight efficiency may be more than doubled, as is shown above. By carefully choosing the twist angle of the transmissive sub-pixel, both the grayscale linearity and viewing angle of the display may be improved, while at the same time the driving voltages are lowered. This results in a significant power reduction and viewing angle improvement.

It shall be noted that the above-described voltage difference for different sub-pixels may be achieved by letting different driving voltages be generated directly by a driving integrated circuit (i.e. integrating a voltage altering device in the driving IC) or by including the voltage altering device in the sub-pixel, as is described above. The latter method is advantageous in that simpler driving integrated circuits may be used and the number of data lines in the display may also be reduced.

It shall also be noted that the above-described sub-pixel voltage altering device may be realized as a more complicated circuit than the above single capacitor. For example, in the case of a LTPS (Low temperature Poly-Si) display, a voltage altering device comprising several transistors, resistors and capacitors is preferred.

**Claims**

1. A transflective liquid crystal display device (11), having at least one pixel, comprising a reflective sub-pixel (11b) including a first liquid crystal cell and a transmissive sub-pixel (11a) including a second liquid crystal cell, **characterized in that** said first and second liquid crystal cells are arranged to be driven at mutually different driving voltages.

2. A display device as in claim 1, wherein one of said sub-pixels (11a, 11b) is provided with a sub-pixel voltage altering device (C1).

3. A display device as in claim 2, wherein said sub-pixel voltage altering device (C1) is connected in series with a liquid crystal cell of said one sub-pixel.

4. A display device as in claim 2 or 3, wherein said sub-pixel voltage altering device is constituted by a first capacitor (C1).

5. A display device as in any one the claims 2-4, wherein a second altering circuit is connected in parallel with the liquid crystal cell of said one sub-pixel, being connected in series with said sub-pixel voltage altering device.

6. A display device as in claim 5, wherein said second altering circuit is constituted by a second capacitor C2.

7. A display device as in any one of the preceding claims, wherein the liquid crystal material of said first and a second liquid crystal cells, have mutually different twist angles.

8. A display device as in any one of the claims 2-7, wherein said sub-pixel voltage altering device is arranged to alter a voltage applied to said one sub-pixel by a data line of said display.

9. A method for addressing a transflective liquid crystal display device, having at least one pixel (11), comprising a first sub-pixel (11a) including a first liquid crystal cell (15a) and a second sub-pixel (11b) including a second liquid crystal cell (15b) comprising the following steps:

   - applying a first driving voltage (V1) over said first liquid crystal cell and

   - applying a second driving voltage (V2) over said second liquid crystal cell, said first driving voltage being different from said second driving voltage.

10. A method according to claim 9, in which the liquid crystal display comprises in said first sub-pixel, a sub-pixel voltage altering device, the method further comprising the steps of:

   applying a common voltage VTOT, equal to the desired second driving voltage (V2), over said first and second sub-pixels, respectively, the voltage over said first liquid crystal cell (15a) due to the sub-pixel voltage altering device being substantially equal to said first driving voltage (V1), when the second driving voltage is applied to the second sub-pixel.

11. The method according to claim 10, said driving voltages (V1, V2) having been individually determined in order to optimize the reflection in case of a reflective sub-pixel or the transmission in case of a transmissive sub-pixel of said display device.

12. The method according to claim 10 or 11, in which said sub-pixel voltage altering device (C1) is arranged in series with said liquid crystal cell (15a) of said one sub-pixel.

13. The method according to claim 10, 11 or 12, wherein said sub-pixel voltage altering device is constituted by a first capacitor (C1).

14. The method according to any one of the claims 10-13, the device further comprising a second altering circuit (C2) in parallel with the liquid crystal cell (15a) of said one sub-pixel, being connected in series with said sub-pixel voltage altering device.

15. The method according to claim 14, wherein said second altering circuit is constituted by a second capacitor (C2).

16. The method in accordance with any one of the claims 9-15, the device further comprising a first twist angle of a liquid crystal layer of said first sub-pixel, and a second twist angle of a liquid crystal layer of said second sub-pixel, said first and second twist angles being mutually different.

**Patentansprüche**

1. Transflektive Flüssigkristallanzeigevorrichtung (11) mit mindestens einem Pixel, welches ein reflektives Subpixel (11b) mit einer ersten Flüssigkristallzelle und ein transmissives Subpixel (11a) mit einer zweiten Flüssigkristallzelle aufweist, **dadurch gekennzeichnet, dass** die erste und zweite Flüssigkristallzelle so angeordnet sind, dass diese bei gegenseitig unterschiedlichen Steuerspannungen angesteuert werden.

2. Vorrichtung nach Anspruch 1, wobei eines der Subpixel (11a, 11b) mit einem Subpixelspannungsänderungselement (C1) versehen ist.

3. Vorrichtung nach Anspruch 2, wobei das Subpixelspannungsänderungselement (C1) in Reihe mit einer Flüssigkristallzelle des einen Subpixels geschaltet ist.

4. Vorrichtung nach Anspruch 2 oder 3, wobei das Subpixelspannungsänderungselement durch einen ersten Kondensator (C1) gebildet wird.

5. Vorrichtung nach einem der Ansprüche 2 bis 4, wobei ein zweiter Änderungsschaltkreis parallel zu der Flüssigkristallzelle des einen Subpixels geschaltet ist, welcher in Reihe mit dem Subpixelspannungsänderungselement geschaltet ist.

6. Vorrichtung nach Anspruch 5, wobei der zweite Änderungsschaltkreis durch einen zweiten Kondensator (C2) gebildet wird.

7. Vorrichtung nach einem der vorangegangenen Ansprüche, wobei das Flüssigkristallmaterial der ersten und einer zweiten Flüssigkristallzelle gegenseitig unterschiedliche Verdrehungswinkel aufweist.

8. Vorrichtung nach einem der Ansprüche 2 bis 7, wobei das Subpixelspannungsänderungselement so angeordnet ist, dass es eine, an das eine Subpixel durch eine Datenleitung der Anzeige angelegte Spannung ändert.

9. Verfahren zur Adressierung einer transflektiven Flüssigkristallanzeigevorrichtung mit mindestens einem Pixel (11), welches ein erstes Subpixel (11a) mit einer ersten Flüssigkristallzelle (15a) und ein zweites Subpixel (11b) mit einer zweiten Flüssigkristallzelle (15b) aufweist, wonach

- eine erste Steuerspannung (V1) an die erste Flüssigkristallzelle angelegt wird und
- eine zweite Steuerspannung (V2) an die zweite Flüssigkristallzelle angelegt wird, wobei die erste Steuerspannung von der zweiten Steuerspannung abweicht.

10. Verfahren nach Anspruch 9, wobei die Flüssigkristallanzeigevorrichtung in dem ersten Subpixel ein Subpixelspannungsänderungselement aufweist, wobei das Verfahren weiterhin die folgenden Schritte vorsieht:

Anlegen einer, der gewünschten zweiten Steuerspannung (V2) gleichenden, gemeinsamen Spannung VTOT an jeweils das erste und zweite Subpixel, wobei die Spannung an der ersten Flüssigkristallzelle (15a) auf Grund des Subpixelspannungsänderungselements im Wesentlichen der ersten Steuerspannung (V1) entspricht, wenn die zweite Steuerspannung an das zweite Subpixel angelegt wird.

11. Verfahren nach Anspruch 10, wobei die Steuerspannungen (V1, V2) einzeln ermittelt werden, um die Reflexion bei einem reflektiven Subpixel oder die Transmission bei einem transmissiven Subpixel der Anzeigevorrichtung zu optimieren.

12. Verfahren nach Anspruch 10 oder 11, wobei das Subpixelspannungsänderungselement (C1) in Reihe mit der Flüssigkristallzelle (15a) des einen Subpixels geschaltet ist.

13. Verfahren nach Anspruch 10, 11 oder 12, wobei das Subpixelspannungsänderungselement durch einen ersten Kondensator (C1) gebildet wird.

14. Verfahren nach einem der Ansprüche 10 bis 13, wobei die Vorrichtung weiterhin einen zweiten Änderungsschaltkreis (C2) parallel zu der Flüssigkristallzelle (15a) des einen Subpixels aufweist, welcher in Reihe mit dem Subpixelspannungsänderungselement geschaltet ist.

15. Verfahren nach Anspruch 14, wobei der zweite Änderungsschaltkreis durch einen zweiten Kondensator (C2) gebildet wird.

16. Verfahren nach einem der Ansprüche 9 bis 15, wobei die Vorrichtung weiterhin einen ersten Verdrehungswinkel einer Flüssigkristallschicht des ersten Subpixels und einen zweiten Verdrehungswinkel einer Flüssigkristallschicht des zweiten Subpixels aufweist, wobei der erste und zweite Verdrehungswinkel gegenseitig unterschiedlich sind.

**Revendications**

1. Dispositif d'affichage à cristaux liquides transflectif (11), comportant au moins un pixel, comprenant un sous-pixel réflectif (11b) comprenant une première cellule à cristaux liquides et un sous-pixel transmissif (11a) comprenant une seconde cellule à cristaux liquides, **caractérisé en ce que** lesdites première et seconde cellules à cristaux liquides sont agencées de manière à être pilotées à des tensions de pilotage mutuellement différentes.

**2.** Dispositif d'affichage suivant la revendication 1, dans lequel un desdits sous-pixels (11a, 11b) est pourvu d'un dispositif modificateur de tension de sous-pixel (C1).

**3.** Dispositif d'affichage suivant la revendication 2, dans lequel ledit dispositif modificateur de tension de sous-pixel (C1) est connecté en série avec une cellule à cristaux liquides dudit sous-pixel.

**4.** Dispositif d'affichage suivant la revendication 2 ou 3, dans lequel ledit dispositif modificateur de tension de sous-pixel est constitué par un premier condensateur (C1).

**5.** Dispositif d'affichage suivant l'une quelconque des revendications 2-4, dans lequel un second circuit modificateur est connecté en parallèle avec la cellule à cristaux liquides dudit sous-pixel, étant connecté en série avec ledit dispositif modificateur de tension de sous-pixel.

**6.** Dispositif d'affichage suivant la revendication 5, dans lequel ledit second circuit modificateur est constitué par un second condensateur C2.

**7.** Dispositif d'affichage suivant l'une quelconque des revendications précédentes, dans lequel les cristaux liquides de ladite première et de ladite seconde cellules à cristaux liquides, ont des angles de torsion en hélice mutuellement différents.

**8.** Dispositif d'affichage suivant l'une quelconque des revendications 2 à 7, dans lequel ledit dispositif modificateur de tension de sous-pixel est agencé de manière à modifier une tension appliquée audit sous-pixel d'une ligne de données dudit affichage.

**9.** Procédé pour adresser un dispositif d'affichage à cristaux liquides transflectif, comportant au moins un pixel (11), comprenant un premier sous-pixel (11a) comprenant une première cellule à cristaux liquides (15a) et un second sous-pixel (11b) comprenant une seconde cellule à cristaux liquides (15b), comprenant les étapes suivantes :

- appliquer une première tension de pilotage (V1) sur ladite première cellule à cristaux liquides, et
- appliquer une seconde tension de pilotage (V2) sur ladite seconde cellule à cristaux liquides, ladite première tension de pilotage étant différente de ladite seconde tension de pilotage.

**10.** Procédé suivant la revendication 9, dans lequel l'affichage à cristaux liquides comprend, dans ledit premier sous-pixel, un dispositif modificateur de tension de sous-pixel, le procédé comprenant en outre les étapes suivantes :

appliquer une tension commune VTOT, égale à la seconde tension de pilotage souhaitée (V2), sur lesdits premier et second sous-pixels, respectivement, la tension sur ladite première cellule à cristaux liquides (15a), suite au dispositif modificateur de tension de sous-pixel, étant sensiblement égale à ladite première tension de pilotage (V1), lorsque la seconde tension de pilotage est appliquée au second sous-pixel.

**11.** Procédé suivant la revendication 10, lesdites tensions de pilotage (V1, V2) ayant été individuellement déterminées afin d'optimiser la réflexion dans le cas d'un sous-pixel réflectif ou la transmission dans le cas d'un sous-pixel transmissif dudit dispositif d'affichage.

**12.** Procédé suivant la revendication 10 ou 11, dans lequel ledit dispositif modificateur de tension de sous-pixel (C1) est monté en série avec la cellule à cristaux liquides (15a) dudit sous-pixel.

**13.** Procédé suivant la revendication 10, 11 ou 12, dans lequel ledit dispositif modificateur de tension de sous-pixel est constitué d'un premier condensateur (C1).

**14.** Procédé suivant l'une quelconque des revendications 10-13, le dispositif comportant en outre un second circuit modificateur (C2) en parallèle avec la cellule à cristaux liquides (15a) dudit sous-pixel, connecté en série avec ledit dispositif modificateur de tension de sous-pixel

**15.** Procédé suivant la revendication 14, dans lequel ledit second circuit modificateur est constitué d'un second condensateur (C2).

**16.** Procédé suivant l'une quelconque des revendications 9 - 15, le dispositif comprenant en outre un premier angle de torsion en hélice d'une couche de cristaux liquides dudit premier sous-pixel, et un second angle de torsion en hélice d'une couche de cristaux liquides dudit second sous-pixel, lesdits premier et second angles de torsion en hélice étant mutuellement différents.

FIG.1

FIG.2

# FIG.3

# FIG.4

FIG.5

FIG.6

FIG.7a

FIG.7b

FIG.7c